# EUROPÄISCHE PATENTSCHRIFT

(11) **EP 0 945 297 B1**
(45) Veröffentlichungstag und Bekanntmachung des Hinweises auf die Patenterteilung: **14.05.2003**
(21) Anmeldenummer: 99102706.1
(22) Anmeldetag: 17.02.1999
(51) Int. Cl.: B60K 13/04, F01N 7/18

(54) **Abgasanlage für ein Kraftfahrzeug**
Exhaust system for a motor vehicle
Système d'échappement pour un véhicule automobile

(30) Priorität: 23.03.1998 DE 19812699
(43) Veröffentlichungstag der Anmeldung: 29.09.1999
(73) Patentinhaber: Volkswagen Aktiengesellschaft, 38436 Wolfsburg (DE)
(72) Erfinder: Dzemal, Sjenar, 38444 Wolfsburg (DE)

(56) Entgegenhaltungen:
- EP-A- 0 429 061
- EP-A- 0 807 749
- DE-A- 2 803 270
- GB-A- 2 172 688

## Beschreibung

Die Erfindung betrifft eine Abgasanlage für eine Kraftfahrzeug, mit mindestens einer im wesentlichen in Fahrzeuglängsrichtung (x-Richtung) verlaufenden Abgasleitung und mindestens einer ersten Aufhängevorrichtung für die Abgasleitung, wobei die Abgasleitung mit einem Schwingungen verursachenden, vorzugsweise pendelnd aufgehängten Verbrennungsmotor entsprechend verbindbar und durch mindestens ein zwischen dem Verbrennungsmotor und der Abgasleitung vorgesehenes Abkopplungselement schwingungstechnisch vom Verbrennungsmotor entkoppelbar ist.

Im Stand der Technik sind verschiedene Abgasanlagen bekannt, bei denen unterschiedliche Aufhängevorrichtungen für eine Abgasleitung verwendet werden. Im allgemeinen wird bei der Abgasanlage eines Kraftfahrzeugs angestrebt, den (pendelnd aufgehängten) Verbrennungsmotor schwingungstechnisch von der Abgasanlage abzukoppeln, so daß die durch den Verbrennungsmotor verursachten Schwingungen zumindest nicht vollständig auf die Abgasanlage wirken, sondern zumeist die Abgasanlage hier nur gedämpfte Schwingungen des Verbrennungsmotors aufnehmen muß. Hierzu ist es bekannt, zwischen dem pendelnd aufgehängten Verbrennungsmotor und der Abgasleitung der Abgasanlage ein Abkopplungselement anzuordnen. Diese Abkopplungselemente sind in der Regel hochdämpfend (durch innere Reibung) und können entweder flexibel und selbsttragend sein, so daß sie keine Aufhängung benötigen, oder hochflexibel, so daß sie eine zusätzliche Aufhängung benötigen.

Während die flexiblen Abkopplungselemente die Motorbewegungen in Fahrzeuglängsrichtung im wesentlichen auf die Abgasanlage übertragen und somit die Abgasanlage den Motorbewegungen folgt, wird durch die hochflexiblen Abkopplungselemente eine weitgehende Trennung der Längsbewegungen von Motor und Abgasanlage erreicht. Die hochflexiblen Abkopplungselemente können bei entsprechender Krafteinwirkung zu einer geringeren Länge gestaucht und bei der entgegengesetzten Krafteinwirkung zu einer größeren Länge gestreckt bzw. ausgedehnt werden. Die Bewegung des Verbrennungsmotors in Fahrzeuglängsrichtung (x-Richtung) ist im allgemeinen durch die Motorlagerung, bei der Pendellagerung durch die Pendelstütze festgelegt, die beispielsweise bis zu ± 15 mm betragen kann. Durch diese Motorbewegungen wird das Abkopplungselement gestaucht beziehungsweise gestreckt.

Im Stand der Technik sind verschiedene Aufhängevorrichtungen für die Abgasleitung einer Abgasanlage bekannt. So wird bei der US-PS 4,349,078 ein Katalysator bzw. eine Abgasleitung über ein erstes Verbindungselement und zwei zweite Verbindungselemente sowie vorgesehene Aufhängungselemente entsprechend aufgehängt. Der Katalysator bzw. die Abgasleitung ist funktional mit einem ersten Verbindungselement verbunden, das stangenähnlich ausgebildet ist. Die Enden des ersten Verbindungselements sind mit elastischen Aufhängungselementen verbunden, die wiederum über zweite Verbindungselemente mit der Karosserie des Fahrzeugs verbunden sind. Hierbei liegen die auf gegenüberliegenden Seiten des Katalysators bzw. der Abgasleitung angeordnete Aufhängungselemente in einer Ebene. Verursacht der mit der hier gezeigten Abgasanlage bzw. Abgasleitung verbundene Verbrennungsmotor nun entsprechende Schwingungen, so wird der Katalysator bzw. die Abgasleitung entsprechend in Fahrzeuglängsrichtung (x-Richtung) bewegt, also sowohl nach vorne als auch nach hinten bewegt.

Bei der in der DE-A-44 37 540 beschriebenen Abgasanlage sind - in Motorlängsrichtung gesehen - Durchlaufträger angeordnet, die in einer Querebene mit den einzelnen hier vorgesehenen Abgasleitungen über Halteelemente schubsteif und in Motorlängsrichtung biegeweich verbunden sind, wobei die Durchlaufträger über elastische Abstützglieder gehalten werden. Aufgrund dieser Konstruktion werden die vom Verbrennungsmotor verursachten Schwingungen nicht vollständig auf die Abgasanlage bzw. die Abgasleitungen übertragen, so daß eine Zerstörung von den zwischen den Abgasleitungen angeordneten Kompensatoren verhindert wird. Aber auch bei der hier geschilderten Konstruktion bewegen sich die Abgasleitungen in Fahrzeuglängsrichtung (x-Richtung) hin und her, also sowohl nach vorne als auch nach hinten.

Bei der aus der DE 28 03 270 A1 bekannten gattungsgemäßen Abgasanlage enthält die erste Aufhängevorrichtung zwei schlaufenartige Rundgummiringe mit relativ großen Durchmessern, die aufgrund ihrer geometrischen Konfiguration und ihrer Elastizität Längsbewegungen des Abgasrohres und insbesondere des hinteren Teils desselben zulassen. Auch hier besteht also die Gefahr, daß das als Wellrohr ausgebildete Abkopplungselement hohen Belastungen unterworfen ist, wenn es von dem Verbrennungsmotor und dem hinteren Teil des Abgasrohres her mit einander entgegen gerichteten Kräften beaufschlagt wird.

Die Praxis hat gezeigt, daß die Beanspruchungen, die auf ein zwischen dem Verbrennungsmotor und der Abgasleitung angeordnetes Abkopplungselement wirken, äußerst hoch sind. Dadurch, daß einerseits der pendelnd aufgehängte Verbrennungsmotor in Fahrzeuglängsrichtung (x-Richtung) hin- und her schwingt und diese Schwingung auf das Abkopplungselement überträgt und andererseits die Abgasleitung selber ebenfalls in Fahrzeuglängsrichtung (x-Richtung) hin- und her schwingt, kann es vorkommen, daß beispielsweise der Verbrennungsmotor in Fahrzeuglängsrichtung nach vorne schwingt, wohingegen die Abgasleitung in Fahrzeuglängsrichtung gleichzeitig nach hinten schwingt. Folglich kommt es zu einer großen Streckung des flexibel ausgebildeten Abkopplungselements. Im gegenteiligen Fall kann es zu einer sehr großen Stauchung des Abkopplungselements kommen. Die auf das Abkopplungselement wirkenden Belastungen sind sehr hoch, so daß der Verschleiß des Abkopplungselements erhöht ist. Aufgrund eines entsprechenden Materialverschleißes kommt es - wie die Praxis gezeigt hat - des öfteren zu Materialbrüchen.

Wird das Abkopplungselement sehr stark, eventuell sogar bis zum Anschlag gedehnt oder gestaucht, so es zeigt ein deutlich steiferes Verhalten als im entspannten Zustand und leitet entsprechend mehr Energie in die Abgasanlage.

Der Erfindung liegt daher die Aufgabe zugrunde, eine Abgasanlage der eingangs genannten Art derart auszugestalten und weiterzubilden, daß die auf das Abkopplungselement wirkenden Belastungen verringert sind. Weiterhin soll der Fahrzeugaufbau von den Schwingungen der Abgasleitung isoliert (entkoppelt) werden).

Die zuvor aufgezeigte Aufgabe ist nun dadurch gelöst, daß die erste Aufhängevorrichtung - auf der dem Verbrennungsmotor abgewandten Seite des Abkopplungselements - im wesentlichen direkt hinter dem Abkopplungselement angeordnet und so ausgebildet ist, daß die Abgasleitung im Bereich der ersten Aufhängevorrichtung in Fahrzeuglängsrichtung (x-Richtung) im wesentlichen fixiert ist. Dadurch, daß nun eine Bewegung der Abgasleitung in Fahrzeuglängsrichtung (x-Richtung), also nach vorne und nach hinten im wesentlichen direkt hinter dem Abkopplungselement verhindert wird, wirken im wesentlichen nur noch die Schwingungen des Verbrennungsmotors auf das Abkopplungselement. Folglich ist eine entsprechende Überlagerung von Schwingungen der Abgasleitung und des Verbrennungsmotors, die zu einer übermäßigen Streckung bzw. Stauchung des Abkopplungselements führen kann, verhindert. Aus diesem Grund sind auch die auf das Abkopplungselement wirkenden Belastungen minimiert, was zu einem geringeren Materialverschleiß und zu einer längeren Lebensdauer des Abkopplungselements führt, wodurch wiederum Reparatur- und Servicearbeiten minimiert werden. Insbesondere ist - im Endeffekt - durch die entsprechend ausgestaltete erste Aufhängevorrichtung auch eine optimale Positionierung des Abkopplungselements möglich. Weiterhin ist auch bei größeren Längenänderungen in Fahrzeug-X-Richtung eine gute Abkopplung des Fahrzeugaufbaus von den Schwingungen der Abgasanlage gewährleistet.

Es gibt nun eine Vielzahl von Möglichkeiten, die erfindungsgemäße Abgasanlage in vorteilhafter Weise auszugestalten und weiterzubilden. Hierfür darf an dieser Stelle auf die dem Patentanspruch 1 nachgeordneten Patentansprüche verwiesen werden. Im folgenden werden nun mehrere Ausführungsbeispiele der Erfindung anhand einer Zeichnung näher erläutert. Die Zeichnung zeigt
- Fig. 1: eine erfindungsgemäße Abgasanlage in schematischer Darstellung von oben,
- Fig. 2: die erste Aufhängevorrichtung der erfindungsgemäßen Abgasanlage in der bevorzugten Ausführungsform in einem Schnitt in Fahrzeugquerrichtung in einer schematischen Darstellung,
- Fig. 3: die erste Aufhängevorrichtung aus Fig. 2 in einer schematischen Darstellung von oben und
- Fig. 4: eine zweite Ausführungsform für eine erste Aufhängevorrichtung in einer schematischen Darstellung von der Seite.
- Fig. 5: eine Draufsicht auf die Aufhängevorrichtung von Fig. 4.

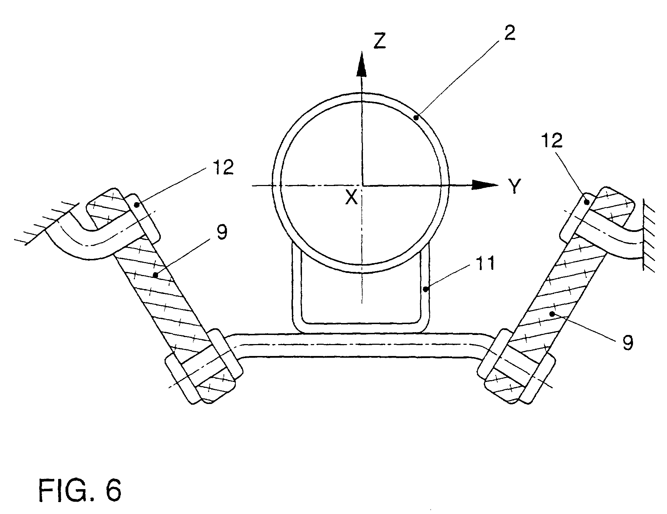

- Fig. 6: eine Vorderansicht in Schnittdarstellung der Aufhängevorrichtung der Fig. 4.

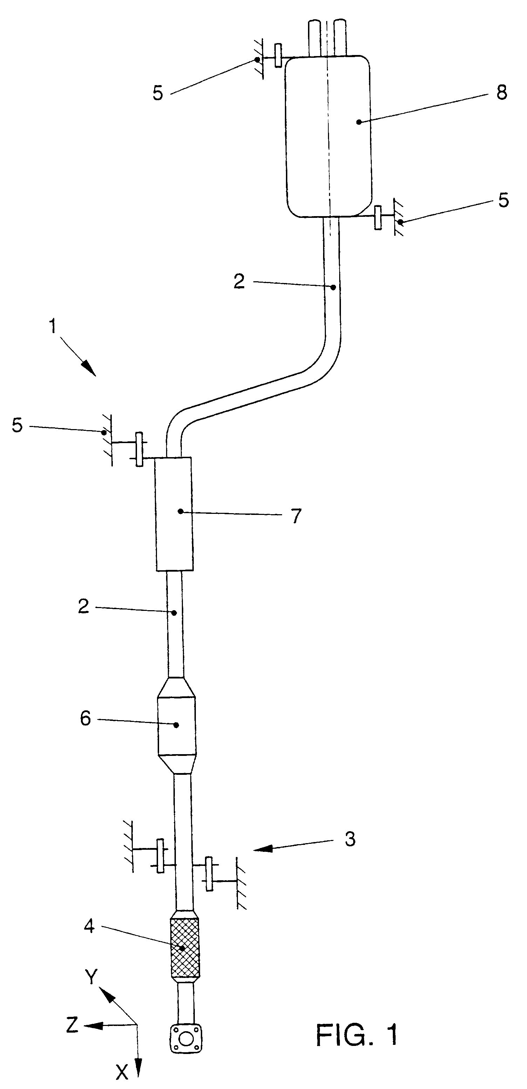

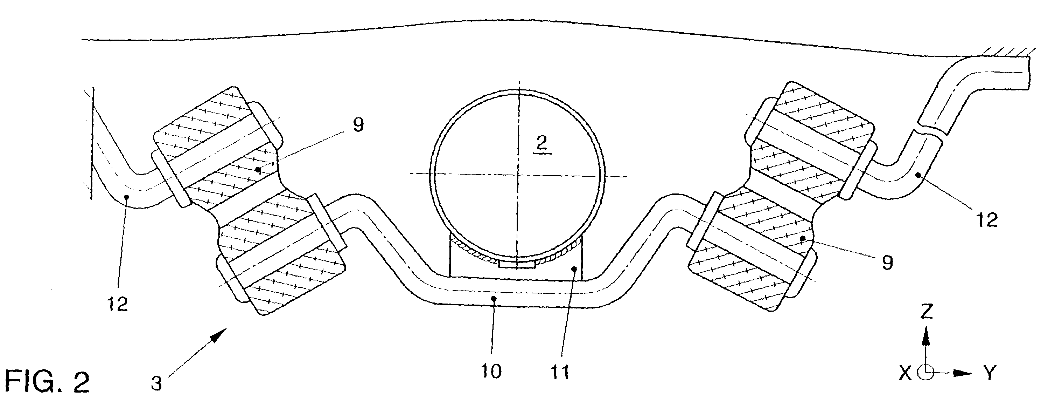

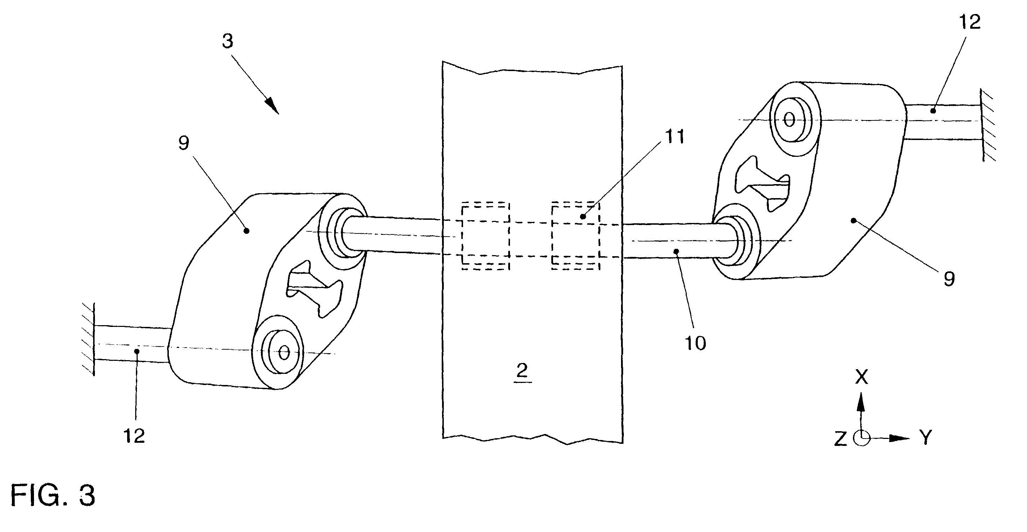

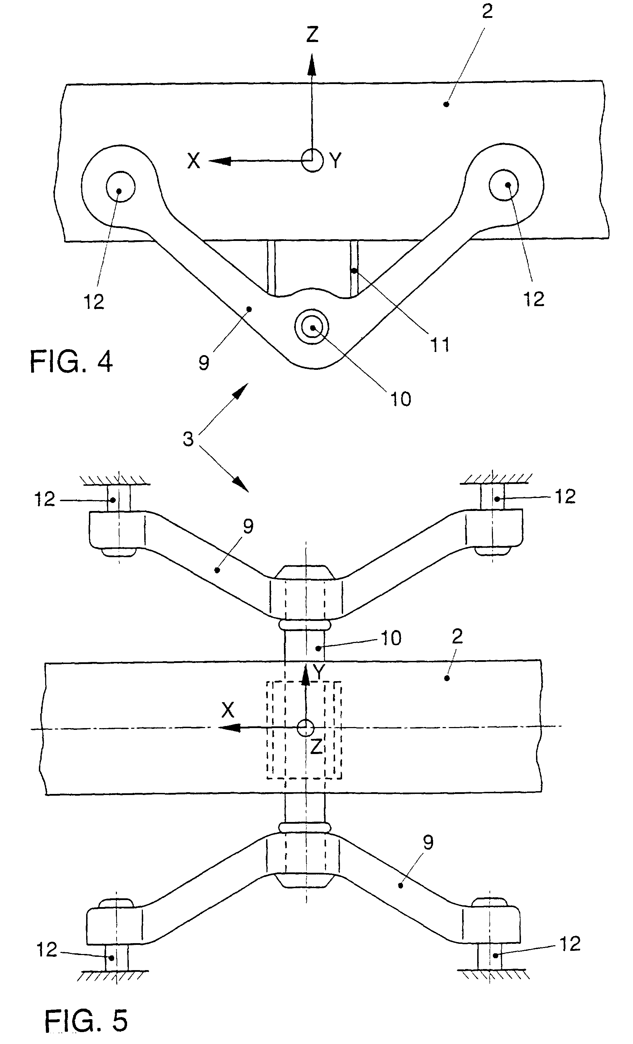

Die Fig. 1 zeigt eine erfindungsgemäße Abgasanlage 1 für ein nicht näher dargestelltes Kraftfahrzeug mit einer im wesentlichen in Fahrzeuglängsrichtung, nämlich x-Richtung, verlaufenden Abgasleitung 2 und einer ersten Aufhängevorrichtung 3 für die Abgasleitung 2. Ein erstes Ausführungsbeispiel für die erste Aufhängevorrichtung 3 ist in den Fig. 2 und 3 und ein zweites Ausführungsbeispiel für eine erste Aufhängevorrichtung 3 ist in der Fig. 4 näher dargestellt.

Die Abgasleitung 2 ist mit einem Schwingungen verursachenden, vorzugsweise pendelnd aufgehängten - hier nicht dargestellten - Verbrennungsmotor entsprechend verbindbar. Zwischen dem Verbrennungsmotor und der Abgasleitung 2 ist ein Abkopplungselement 4 vorgesehen, das die Abgasleitung 2 schwingungstechnisch vom nicht dargestellten Verbrennungsmotor entkoppelt. Gut zu erkennen in Fig. ist das Abkopplungselement 4, das an seinem linken Ende mit dem nicht dargestellten Verbrennungsmotor und an seinem rechten Ende mit der dargestellten Abgasleitung 2 verbunden ist.

Weiterhin zeigt die Fig. 1 nicht nur die erste Aufhängevorrichtung 3, sondern auch weitere zusätzliche Aufhängevorrichtungen 5, so daß die Abgasanlage, hier die Abgasleitung 2, auch im hinteren Bereich des Kraftfahrzeugs entsprechend aufgehängt werden kann.

Die oben beschriebenen Nachteile werden nun dadurch vermieden, daß die erste Aufhängevorrichtung 3 - auf der dem Verbrennungsmotor abgewandten Seite des Abkopplungselements 4 - im wesentlichen direkt hinter dem Abkopplungselement 4 angeordnet und so ausgebildet ist, daß die Abgasleitung 2 im Bereich der ersten Aufhängevorrichtung 3 in Fahrzeuglängsrichtung, nämlich x-Richtung, im wesentlichen fixiert ist. Es ist weiter von Bedeutung, daß die Abgasleitung 2 zwar im Bereich der ersten Aufhängevorrichtung 3 insbesondere in der aus dem in Fig. 1 dargestellten Koordinatensystem ersichtlichen x-Richtung fixiert ist, aber nicht durch die übrigen Aufhängevorrichtungen 5 in der x-Richtung fixiert wird. Folglich kann die Abgasleitung 2 der Abgasanlage 1 durchaus - von der ersten Aufhängevorrichtung 3 gesehen - sich auch in x-Richtung weiter nach hinten bewegen bzw. schwingen. Durch die erste Aufhängevorrichtung 3 wird jedoch Sorge getragen, daß die Bewegungen der Abgasleitung 2 in x-Richtung sich nicht auf das Abkopplungselement 4 übertragen lassen bzw. auf das Abkopplungselement 4 wirken können, wodurch die oben beschriebene übermäßige Stauchung bzw. Streckung des Abkopplungselements 4 verhindert ist.

Das in Fig. 1 dargestellte Abkopplungselement 4 ist als Flexibler Schlauch oder Flexschlauch ausgebildet. Weiterhin ist der Fig. 1 zu entnehmen, daß die Abgasanlage 1 einen Katalysator 6 und zwei weitere Abgasschalldämpfer 7 und 8 aufweist.

Die in Fig. 1 schematisch erkennbare erste Aufhängevorrichtung 3 ist in den Fig. 2 und 3 im einzelnen schematisch dargestellt.

Die Fig. 2 und 3 zeigen, daß die erste Aufhängevorrichtung 3 zwei Aufhängungselemente 9 aufweist. Die Aufhängungselemente 9 sind hier als Gummielemente ausgeführt und weisen bei der hier in den Fig. 2 und 3 dargestellten bevorzugten Ausführungsform eine spezifische Form ähnlich einer abgerundeten dreidimensionalen Raute auf.

Weiterhin weist die erste Aufhängevorrichtung 3 ein erstes Verbindungselement 10 zur Aufnahme der Abgasleitung 2 auf. Jedes Ende des ersten Verbindungselements 10 ist mit einem Aufhängungselement 9 verbunden. Vorzugsweise sind die Enden des ersten Verbindungselements 10 in erste nicht näher bezeichnete Führungen der Aufhängungselemente 9 einsteckbar. Wie aus der Fig. zu erkennen ist, ist die Abgasleitung 2 oberhalb des ersten Verbindungselements 10 angeordnet und mit diesem über mindestens ein Stützelement 11, hier zwei Stützelemente 11 (wie Fig. zeigt) verbunden. Das erste Verbindungselement 10 ist im wesentlichen V-förmig ausgebildet, wobei der mittlere Bereich des ersten Verbindungselements 10 nicht spitz zuläuft, sondern so ausgebildet ist, daß ein Aufnahmebereich für die Abgasleitung 2 vorgesehen ist. Die Enden des ersten Verbindungselements 10 sind aber - im Gegensatz zu den nach oben ragenden, die V-Form bildenden nicht näher bezeichneten Schenkeln - nach unten verlaufend ausgebildet.

Die erste Aufhängevorrichtung 3 weist zur Verbindung der Aufhängungselemente 9 und des ersten Verbindungselements 10 mit dem hier nur angedeuteten, nicht näher bezeichneten Fahrzeugaufbau zwei zweite Verbindungselemente 12 auf. Auch die zweiten Verbindungselemente 12 sind ähnlich wie das erste Verbindungselement 10 stangenähnlich ausgeführt. Ein Ende des zweiten Verbindungselements 12 ist mit dem Fahrzeugaufbau verbunden und das andere Ende des zweiten Verbidungselements 12 ist in eine Führung des Aufhängungselements 9 vorzugsweise einsteckbar bzw. mit dem Aufhängungselement 9 verbunden.

Fig. 3 und das hier angedeutete Koordinatensystem zeigt deutlich, daß die Aufhängungselemente 9 zwar auf gegenüberliegenden Seiten der Abgasleitung 2, aber - in Fahrzeuglängsrichtung, nämlich x-Richtung gesehen - hintereinander, also nicht auf gleicher Höhe angeordnet sind. Aufgrund dieser Anordnung wirken das erste Verbindungselement 10, die Aufhängungselemente 9 und die zweiten Verbindungselemente 12 so zusammen, daß im Bereich der ersten Aufhängevorrichtung 3 eine Bewegung der Abgasleitung 2 in Fahrzeuglängsrichtung, nämlich in x-Richtung, sowohl in Fahrtrichtung als auch in der zur Fahrtrichtung entgegengesetzten Richtung im wesentlichen verhindert ist. Beispielsweise verhindert bei der in Fig. 3 gezeigten Ausführungsform der obere rechte Teil der ersten Aufhängevorrichtung 3 eine Bewegung der Abgasleitung 2 nach hinten (dies ist in Fig. 3 nach unten) und der linke Teil der ersten Aufhängevorrichtung 3 eine Bewegung der Abgasleitung 2 nach vorne (das ist in Fig. 3 eine Bewegung der Abgasleitung 2 nach oben). Dies liegt insbesondere auch daran, daß die Aufhängungselemente 9 so ausgelegt sind, daß eine Beanspruchung auf Zug nur eine - wenn überhaupt - unwesentliche Längenänderung der Aufhängungselemente 9 zur Folge hat.

Weiterhin ist die erste Aufhängevorrichtung 3 aber so ausgeführt, daß das erste Verbindungselement 10, die Aufhängungselemente 9 und die zweiten Verbindungselemente 12 so zusammenwirken, daß im Bereich der ersten Aufhängevorrichtung 3 eine Bewegung der Abgasleitung 2 in Fahrzeugquerrichtung, nämlich in y-Richtung im wesentlichen verhindert ist, wodurch wiederum der Materialverschleiß bezüglich des Abkopplungselements 4 verringert ist, da auch die Beanspruchungen in y-Richtung entsprechend minimiert sind.

Wie Fig. 2 erkennen läßt, können die zweiten Verbindungselemente 12 unterschiedlich ausgeführt werden. Fig. 2 zeigt im linken Teil der ersten Aufhängevorrichtung 3 ein teilweise gekrümmt ausgebildetes zweites Verbindungselement 12, wohingegen im rechten Teil der Fig. 2 ein S-förmig ausgebildetes zweites Verbindungselement 12 dargestellt ist.

Diese in den Figuren 2 und 3 dargestellte Aufhängevorrichtung ist besonderes montagefreundlich.

Fig. 4 zeigt schließlich eine weitere Ausführungsform für eine erste Aufhängevorrichtung 3. Die hier gezeigte erste Aufhängevorrichtung 3 weist zwei nicht näher dargestellte Aufhängungselemente 9 und zwei zweite Verbindungselemente 12 auf, wobei auf jeder Seite der Abgasleitung 2 ein Aufhängungselement 9 und zwei zweite Verbindungselemente 12 vorgesehen sind. Somit sind für die Aufhängung vier Befestigungen an der Karosserie erforderlich. Jedes Aufhängungselement 9 ist in xz-Ebene v-förmig ausgebildet. Bevorzugt zeigt es ebenfalls gemäß Fig. 5 auch in xy-Ebene eine v-förmige oder im wesentlichen v-förmige Ausbildung.

## Patentansprüche

1. Abgasanlage (1) für ein Kraftfahrzeug mit mindestens einer im wesentlichen in Fahrzeuglängsrichtung (x-Richtung) verlaufenden Abgasleitung (2), die mit einem Schwingungen verursachenden, vorzugsweise pendelnd aufgehängten Verbrennungsmotor verbindbar und durch mindestens ein zwischen diesem und der Abgasleitung (2) vorgesehenes Abkopplungselement (4) schwingungstechnisch vom Verbrennungsmotor entkoppelbar ist, und mit mindestens einer ersten Aufhängevorrichtung (3) für die Abgasleitung (2) auf der dem Verbrennungsmotor abgewandten Seite des Abkopplungselements (4) im wesentlichen direkt hinter diesem, **gekennzeichnet durch** solche Ausbildung der ersten Aufhängevorrichtung (3), daß die Abgasleitung (2) im Bereich der ersten Aufhängevorrichtung (3) in Fahrzeuglängsrichtung (x-Richtung) im wesentlichen fixiert ist.

2. Abgasanlage nach dem vorhergehenden Anspruch, **dadurch gekennzeichnet, daß** weitere zusätzliche Aufhängevorrichtungen (5) - in Fahrzeuglängsrichtung (x-Richtung) gesehen - hinter dem Abkopplungselement (4) vorgesehen sind, die zumindest eine Bewegung der Abgasleitung (2) in Fahrzeuglängsrichtung (x-Richtung) zulassen.

3. Abgasanlage nach einem der vorhergehenden Ansprüche, **dadurch gekennzeichnet, daß** das Abkopplungselement (4) als Flexibler Schlauch oder Flexschlauch ausgebildet ist.

4. Abgasanlage nach einem der vorhergehenden Ansprüche, **dadurch gekennzeichnet, daß** die Abgasanlage (1) einen Katalysator (6) und mindestens einen Abgasschalldämpfer (7, 8) aufweist.

5. Abgasanlage nach einem der vorhergehenden Ansprüche, **dadurch gekennzeichnet, daß** die erste Aufhängevorrichtung (3) zwei Aufhängungselemente (9) aufweist.

6. Abgasanlage nach einem der vorhergehenden Ansprüche, **dadurch gekennzeichnet, daß** die Aufhängungselemente (9) als Gummielemente ausgeführt sind.

7. Abgasanlage nach einem der vorhergehenden Ansprüche, **dadurch gekennzeichnet, daß** die erste Aufhängevorrichtung (3) ein erstes Verbindungselement (10) zur Aufnahme der Abgasleitung (2) aufweist und jedes Ende des ersten Verbindungselements (10) mit einem Aufhängungselement (9) verbunden ist.

8. Abgasanlage nach einem der vorhergehenden Ansprüche, **dadurch gekennzeichnet, daß** die Enden des ersten Verbindungselements (10) mit den Aufhängungselementen (9) verbunden sind.

9. Abgasanlage nach einem der vorhergehenden Ansprüche, **dadurch gekennzeichnet, daß** das erste Verbindungselement (10) im wesentlichen V-förmig ausgebildet ist und die Enden des ersten Verbindungselements (10) - im Gegensatz zu den nach oben ragenden, die V-Form bildenden Schenkeln -nach unten verlaufend ausgebildet sind.

10. Abgasanlage nach einem der vorhergehenden Ansprüche, **dadurch gekennzeichnet, daß** die erste Aufhängevorrichtung (3) zur Verbindung der Aufhängungselemente (9) und des ersten Verbindungselements (10) mit dem Fahrzeugaufbau zwei zweite Verbindungselemente (12) aufweist.

11. Abgasanlage nach einem der vorhergehenden Ansprüche, **dadurch gekennzeichnet, daß** die zweiten Verbindungselemente (12) stangenähnlich ausgeführt sind.

12. Abgasanlage nach einem der vorhergehenden Ansprüche, **dadurch gekennzeichnet, daß** ein Ende des zweiten Verbindungselements (12) mit dem Fahrzeugaufbau verbunden und das andere Ende mit dem Aufhängungselement (9) verbunden ist.

13. Abgasanlage nach einem der vorhergehenden Ansprüche, **dadurch gekennzeichnet, daß** die Aufhängungselemente (9) auf in Fahrzeugquerrichtung gegenüberliegenden Seiten der Abgasleitung (2) und in Fahrzeuglängsrichtung (x-Richtung) hintereinander angeordnet sind.

14. Abgasanlage nach einem der vorhergehenden Ansprüche, **dadurch gekennzeichnet, daß** das erste Verbindungselement (10), die Aufhängungselemente (9) und die zweiten Verbindungselemente (12) so zusammenwirken, daß im Bereich der ersten Aufhängevorrichtung (3) eine Bewegung der Abgasleitung (2) in Fahrzeuglängsrichtung (x-Richtung), nämlich in Fahrtrichtung und in der zur Fahrtrichtung entgegengesetzten Richtung im wesentlichen verhindert ist.

15. Abgasanlage nach einem der vorhergehenden Ansprüche, **dadurch gekennzeichnet, daß** das erste Verbindungselement (10), die Aufhängungselemente (9) und die zweiten Verbindungselemente (12) so zusammenwirken, daß im Bereich der ersten Aufhängevorrichtung (3) eine Bewegung der Abgasleitung (2) in Fahrzeugquerrichtung (y-Richtung) im wesentlichen verhindert ist.

16. Abgasanlage nach einem der vorhergehenden Ansprüche, **dadurch gekennzeichnet, daß** die Aufhängungselemente (9) so ausgelegt sind, daß eine Beanspruchung auf Zug nur eine - wenn überhaupt - unwesentliche Längenänderung der Aufhängungselemente (9) zur Folge hat.

17. Abgasanlage nach einem der vorhergehenden Ansprüche, **dadurch gekennzeichnet, daß** die zweiten Verbindungselemente (12) teilweise gekrümmt, insbesondere S-förmig ausgebildet sind.

18. Abgasanlage nach einem der vorhergehenden Ansprüche, **dadurch gekennzeichnet, daß** die erste Aufhängevorrichtung (3) zwei Aufhängungselemente (9) und vier zweite Verbindungselemente (12) aufweist, wobei auf jeder Seite der Abgasleitung (2) ein Aufhängungselement (9) und zwei zweite Verbindungselemente (12) vorgesehen sind, und die Aufhängungselemente (9) in Projektion auf die xz-Ebene im wesentlichen V-förmig ausgebildet sind.

## Claims

1. Exhaust system (1) for a motor vehicle, having at least one exhaust pipe (2) which runs essentially in the longitudinal direction of the vehicle (x-direction), can be connected to an internal combustion engine, which causes vibrations and is preferably suspended in an oscillating manner, and can be isolated in terms of vibrations from the internal combustion engine by at least one decoupling element (4) which is provided between the said internal combustion engine and the exhaust pipe (2), and having at least one first suspension device (3) for the exhaust pipe (2) essentially directly behind the decoupling element (4), on that side of the said decoupling element (4) which faces away from the internal combustion engine, **characterized by** such a design of the first suspension device (3) that the exhaust pipe (2) is essentially fixed in the longitudinal direction of the vehicle (x-direction) in the region of the first suspension device (3).

2. Exhaust system according to the preceding claim, **characterized in that** further, additional suspension devices (5) are - as seen in the longitudinal direction of the vehicle (x-direction) - provided behind the decoupling element (4), the said suspension devices permitting at least a movement of the exhaust pipe (2) in the longitudinal direction of the vehicle (x-direction).

3. Exhaust system according to one of the preceding claims, **characterized in that** the decoupling element (4) is designed as a flexible tube.

4. Exhaust system according to one of the preceding claims, **characterized in that** the exhaust system (1) has a catalytic converter (6) and at least one exhaust silencer (7, 8).

5. Exhaust system according to one of the preceding claims, **characterized in that** the first suspension device (3) has two suspension elements (9).

6. Exhaust system according to one of the preceding claims, **characterized in that** the suspension elements (9) are designed as rubber elements.

7. Exhaust system according to one of the preceding claims, **characterized in that** the first suspension device (3) has a first connecting element (10) for holding the exhaust pipe (2) and each end of the first connecting element (10) is connected to a suspension element (9).

8. Exhaust system according to one of the preceding claims, **characterized in that** the ends of the first connecting element (10) are connected to the suspension elements (9).

9. Exhaust system according to one of the preceding claims, **characterized in that** the first connecting element (10) is of essentially V-shaped design and the ends of the first connecting element (10) are designed such that they run downwards - in contrast to the upwardly protruding limbs which form the V-shape.

10. Exhaust system according to one of the preceding claims, **characterized in that** the first suspension device (3) has two second connecting elements (12) for connecting the suspension elements (9) and the first connecting element (10) to the vehicle body.

11. Exhaust system according to one of the preceding claims, **characterized in that** the second connecting elements (12) are designed such that they resemble rods.

12. Exhaust system according to one of the preceding claims, **characterized in that** one end of the second connecting element (12) is connected to the vehicle body and the other end is connected to the suspension element (9).

13. Exhaust system according to one of the preceding claims, **characterized in that** the suspension elements (9) are arranged on sides of the exhaust pipe (2) which lie opposite in the transverse direction of the vehicle, and are arranged one behind another in the longitudinal direction of the vehicle (x-direction).

14. Exhaust system according to one of the preceding claims, **characterized in that** the first connecting element (10), the suspension elements (9) and the second connecting elements (12) interact in such a manner that in the region of the first suspension device (3) a movement of the exhaust pipe (2) in the longitudinal direction of the vehicle (x-direction), namely in the direction of travel and in the direction opposite to the direction of travel, is essentially prevented.

15. Exhaust system according to one of the preceding claims, **characterized in that** the first connecting element (10), the suspension elements (9) and the second connecting elements (12) interact in such a manner that in the region of the first suspension device (3) a movement of the exhaust pipe (2) in the transverse direction of the vehicle (y-direction) is essentially prevented.

16. Exhaust system according to one of the preceding claims, **characterized in that** the suspension elements (9) are configured in such a manner that tensile stress results only in - if at all - an insignificant change in length of the suspension elements (9).

17. Exhaust system according to one of the preceding claims, **characterized in that** the second connecting elements (12) are of partially curved design, in particular of S-shaped design.

18. Exhaust system according to one of the preceding claims, **characterized in that** the first suspension device (3) has two suspension elements (9) and four second connecting elements (12), one suspension element (9) and two second connecting elements (12) being provided on each side of the exhaust pipe (2), and the suspension elements (9) being of essentially V-shaped design in projection in the xz plane.

## Revendications

1. Système d'échappement (1) pour un véhicule automobile comprenant au moins une conduite de gaz d'échappement (2) s'étendant essentiellement dans la direction longitudinale (direction x) du véhicule, qui peut être connectée à un moteur à combustion interne suspendu de préférence de manière pendulaire, provoquant des oscillations, et désaccouplée du moteur à combustion interne par une technique d'oscillation par au moins un élément de désaccouplement (4) prévu entre celui-ci et la conduite de gaz d'échappement (2), et comprenant au moins un premier dispositif de suspension (3) pour la conduite de gaz d'échappement (2) du côté de l'élément de désaccouplement (4) opposé au moteur à combustion interne essentiellement directement derrière celui-ci, **caractérisé par** une réalisation du premier dispositif de suspension (3) telle que la conduite de gaz d'échappement (2) soit essentiellement fixée dans la région du premier dispositif de suspension (3) dans la direction longitudinale (direction x) du véhicule.

2. Système d'échappement selon la revendication précédente, **caractérisé en ce qu'**il est prévu d'autres dispositifs de suspension supplémentaires (5) - vus dans la direction longitudinale (direction x) du véhicule - derrière l'élément de désaccouplement (4), lesquels autorisent au moins un mouvement de la conduite de gaz d'échappement (2) dans la direction longitudinale (direction x) du véhicule.

3. Système d'échappement selon l'une quelconque des revendications précédentes, **caractérisé en ce que** l'élément de désaccouplement (4) est réalisé sous la forme d'un tuyau souple ou flexible.

4. Système d'échappement selon l'une quelconque des revendications précédentes, **caractérisé en ce que** le système d'échappement (1) présente un catalyseur (6) et au moins un silencieux d'échappement (7, 8).

5. Système d'échappement selon l'une quelconque des revendications précédentes, **caractérisé en ce que** le premier dispositif de suspension (3) présente deux éléments de suspension (9).

6. Système d'échappement selon l'une quelconque des revendications précédentes, **caractérisé en ce que** les éléments de suspension (9) sont réalisés sous forme d'éléments en caoutchouc.

7. Système d'échappement selon l'une quelconque des revendications précédentes, **caractérisé en ce que** le premier dispositif de suspension (3) présente un premier élément de connexion (10) pour recevoir la conduite de gaz d'échappement (2) et chaque extrémité du premier élément de connexion (10) est connectée à un élément de suspension (9).

8. Système d'échappement selon l'une quelconque des revendications précédentes, **caractérisé en ce que** les extrémités du premier élément de connexion (10) sont connectées aux éléments de suspension (9).

9. Système d'échappement selon l'une quelconque des revendications précédentes, **caractérisé en ce que** le premier élément de connexion (10) est réalisé essentiellement en forme de V et les extrémités du premier élément de connexion (10) - contrairement aux branches saillant vers le haut, formant la forme en V, sont réalisées de manière à s'étendre vers le bas.

10. Système d'échappement selon l'une quelconque des revendications précédentes, **caractérisé en ce que** le premier dispositif de suspension (3) pour la connexion des éléments de suspension (9) et du premier élément de connexion (10) à la carrosserie du véhicule présente deux deuxièmes éléments de connexion (12).

11. Système d'échappement selon l'une quelconque des revendications précédentes, **caractérisé en ce que** les deuxièmes éléments de connexion (12) sont réalisés en forme de tiges.

12. Système d'échappement selon l'une quelconque des revendications précédentes, **caractérisé en ce qu'**une extrémité du deuxième élément de connexion (12) est connectée à la carrosserie du véhicule et l'autre extrémité est connectée à l'élément de suspension (9).

13. Système d'échappement selon l'une quelconque des revendications précédentes, **caractérisé en ce que** les éléments de suspension (9) sont disposés sur des côtés opposés de la conduite de gaz d'échappement (2) dans la direction transversale du véhicule et l'un derrière l'autre dans la direction longitudinale (direction x) du véhicule.

14. Système d'échappement selon l'une quelconque des revendications précédentes, **caractérisé en ce que** le premier élément de connexion (10), les éléments de suspension (9) et les deuxièmes éléments de connexion (12) coopèrent de telle sorte qu'un mouvement de la conduite de gaz d'échappement (2) dans la direction longitudinale (direction x) du véhicule, à savoir dans la direction d'avance et dans la direction opposée à l'avance soit essentiellement empêché dans la région du premier dispositif de suspension (3).

15. Système d'échappement selon l'une quelconque des revendications précédentes, **caractérisé en ce que** le premier élément de connexion (10), les éléments de suspension (9) et les deuxièmes éléments de connexion (12) coopèrent de telle sorte qu'un mouvement de la conduite de gaz d'échappement (2) dans la direction transversale (direction y) du véhicule soit essentiellement empêché dans la région du premier dispositif de suspension (3).

16. Système d'échappement selon l'une quelconque des revendications précédentes, **caractérisé en ce que** les éléments de suspension (9) sont conçus de telle sorte qu'une sollicitation de contrainte n'entraîne qu'une variation de longueur peu importante - voire nulle - des éléments de suspension (9).

17. Système d'échappement selon l'une quelconque des revendications précédentes, **caractérisé en ce que** les deuxièmes éléments de connexion (12) sont partiellement coudés, en particulier sont réalisés en forme de S.

18. Système d'échappement selon l'une quelconque des revendications précédentes, **caractérisé en ce que** le premier dispositif de suspension (3) présente deux éléments de suspension (9) et quatre deuxièmes éléments de connexion (12), un élément de suspension (9) et deux deuxièmes éléments de connexion (12) étant prévus de chaque côté de la conduite de gaz d'échappement (2), et les éléments de suspension (9) étant réalisés essentiellement en forme de V en projection sur le plan xz.
